# EUROPÄISCHE PATENTSCHRIFT

(11) **EP 0 564 538 B1**
(45) Veröffentlichungstag und Bekanntmachung des Hinweises auf die Patenterteilung: **23.11.1994**
(21) Anmeldenummer: 92902249.9
(22) Anmeldetag: 24.12.1991
(51) Int. Cl.: G05B 19/405

(54) **VERFAHREN ZUR COMPUTERGESTÜTZTEN STEUERUNG EINER MASCHINE BZW. EINES PROZESSES**
METHOD FOR THE COMPUTER-ASSISTED CONTROL OF A MACHINE OR A PROCESS
PROCEDE POUR LA COMMANDE ASSISTEE PAR ORDINATEUR D'UNE MACHINE OU D'UN PROCESSUS

(30) Priorität: 27.12.1990 DE 4041869
(43) Veröffentlichungstag der Anmeldung: 13.10.1993
(73) Patentinhaber: HMR GmbH, D-69469 Weinheim (DE)
(72) Erfinder: HUSSLEIN, Manfred, D-6940 Weinheim (DE)
(74) Vertreter: Naumann, Ulrich, Dr.-Ing.
(86) Internationale Anmeldenummer: DE9101008
(87) Internationale Veröffentlichungsnummer: WO9212471

(56) Entgegenhaltungen:
- EP-A- 340 538
- EP-A- 0 070 654
- WO-A-87/03712
- DE-A- 3 408 523

## Beschreibung

Die Erfindung betrifft ein Verfahren zur computergestützten Steuerung eines Maschinenablaufs unter Verwendung eines mit der Maschine über eine Schnittstelle verbundenen Prozeßrechners, eines mit dem Prozeßrechner verbundenen Bildschirms zur graphischen Darstellung des Maschinenablaufs und einer vorzugsweise als Tastatur ausgeführten Eingabeeinrichtung zur Programmierung der Steuerung bzw. zur Soll-Wert-Vorgabe, wobei der Steuerung zunächst ein maschinenspezifisches Ablaufdiagramm zugrundegelegt wird und die Programmierung des Steuerungsvorganges bzw. die Vorgabe einzelner Bearbeitungsschritte von Vektoren und/oder Kurven ausgeht.

Die Lehre der Erfindung geht von einem Stand der Technik aus, wie er sich aus der EP-A3-0 070 654 ergibt. Aus dieser Druckschrift ist eine Steuereinrichtung und somit auch ein Verfahren zur computergestützten Steuerung des Antriebs von Servomotoren oder Schrittmotoren bekannt, wobei solche Motoren ganz überwiegend zur Generierung der Bewegung von Robotern eingsetzt werden. Dieser Druckschrift ist es völlig fremd, bereits bei der Installation des dort vorkommenden Steuerverfahrens ein Echtzeitverhalten der Maschine, d.h. des Servo- oder Schrittmotors, zu berücksichtigen. Insbesondere ist es dem aus der in Rede stehenden Druckschrift bekannten Verfahren fremd, die Definition einer Bewegung nach graphischer Vorgabe in Form eines Vektors unter Berücksichtigung der Beschleunigungs- und Verzögerungswerte der entsprechenden Servo-Achsen umzurechnen.

Das aus dem Stand der Technik bekannte Verfahren ist in der Anwendung äußerst problematisch, zumal dessen Steuerung eine quasi starre Programmierung erfordert. Folglich ist hier ein starres Programm herstellerseitig vorzugeben. Die Bedienung einer entsprechenden Steuerung kann lediglich auf die Parameter Einfluß nehmen. Der Ablauf der Steuerung ist nur durch Änderung der Software oder im Falle einer EC-Steuerung durch Ergänzung sog. Verfahrsätze veränderbar.

Auch zeigt das bekannte Verfahren zur Steuerung eines Maschinenablaufs kein vorausberechenbares Echtzeitverhalten des zu steuernden Prozesses. Unabhängig von den maschinenspezifischen Kenndaten gibt die Steuerung nämlich Werte vor, die mit tatsächlich von der Maschine realisierten Daten nicht zwingend übereinstimmen, insbesondere dann nicht, wenn die Maschine bereits einen erheblichen Verschleiß erlitten hat. Nach dem bekannten Verfahren lassen sich Nichtlinearitäten von Beschleunigungen bzw. jegliches Anlaufverhalten von Motoren nur bedingt berücksichtigen. Der Bediener müßte hier die Programmierung des in Rede stehenden Verfahrens in infinitessimal kleinen Schritten vornehmen, wozu er quasi unendlich viele Verfahrenssätze benötigen würde. Dies erfordert jedoch eine erhebliche Speicherkapazität und ist somit kostenaufwendig.

Aus der EP-A1-0 340 538 ist ebenfalls bereits ein Verfahren zum Steuern der Bewegung eines Maschinenelements bekannt. Damit für beliebige Override-Verläufe die Bahnen von mehrachsigen Bewegungen invariant bleiben, werden dort für einen Override-Wert von 100% Weg-Zeit-Verläufe der Achsbewegungen gespeichert, die für den relevanten Weg-Zeit-Verlauf synchron mit dem Verlauf der Override-Werte für jede Achse eine zeitliche Dehnung erfahren, die umgekehrt proportional zum jeweiligen Override-Wert ist. Aus der in Rede stehenden Druckschrift ist u.a. bekannt, unter Zugrundelegung maschinenspezifischer Daten zunächst eine maximale Beschleunigung zu Beginn einer Bewegung zu realisieren, um dann eine Bewegung mit konstanter Geschwindigkeit zu halten und gegen Ende des Bearbeitungsvorganges eine negative Beschleunigung vorzugeben. Auch diese Entgegenhaltung beschäftigt sich mit der Steuerung des Werkzeugs einer Werkzeugmaschine oder der Hand eines Roboters, wobei man sich dort ganz überwiegend mit der Problematik beschäftigt, daß sich für den Falle, daß die reguläre Geschwindigkeit bspw. eines Maschinenablaufs verringert werden soll, die während des Bewegungsvorganges abgefahrene Bahn variant wird, d.h. der Bahnverlauf wie bei der regulären Geschwindigkeit nicht mehr einzuhalten ist.

Der Erfindung liegt daher die Aufgabe zugrunde, ein Verfahren zur Steuerung erines Maschinenablaufs anzugeben, bei dem bereits bei der Einrichtung des Steuerungsverfahrens das Echtzeitverhalten der Maschine berücksichtigt werden kann. Das Verfahren soll dabei hinsichtlich des Steuerungsablaufs flexibel gestaltet sein.

Das erfindungsgemäße Verfahren löst die voranstehende Aufgabe durch die Merkmale des Patentanspruches 1. Danach ist ein Verfahren der in Rede stehenden Art dadurch gekennzeichnet, daß das Zeitverhalten der Maschine dadurch berücksichtigt wird, daß die Bearbeitungsschritte und somit die einzelnen Bewegungen und Vorgänge unter Einbeziehung der maschinenspezifischen Daten in Form eines an den Maschinenablaufs gebundenen Polygonzuges umgerechnet werden, daß die Steuerung je nach Bearbeitungsart weggetaktet oder zeitgetaktet und entsprechend am Bildschirm in graphischer Form als ggf. gemischte Polygonzugangabe abwechselnd weggetaktet und zeitgetaktet in einem einzigen Graphen dargestellt ist.

Erfindungsgemäß ist erkannt worden, daß bspw. bei der Steuerung eines Motors die Programmierung des Steuerungsvorganges in graphischer Form mittels Vektoren und Kurven erfolgt. Dabei wird ein bspw. vom Maschinenbauer bzw. Motorhersteller vorgelegtes Ablaufdiagramm zugrundegelegt. Alle Bewegungen und Soll-Werte werden auf einer Zeitachse dargestellt. Die Definition einer Bewegung wird nach graphischer Vorgabe in Form eines Vektors umgerechnet unter Berücksichtigung der Beschleunigungs- und Verzögerungswerte der entsprechenden Servo-Achse. Die einzelnen Vektoren der gesamten Kinematik werden dann in Polygonzüge umgerechnet, die als Drehzahlregler wegabhängig und ggf. zeitabhängig getaktet werden.

In erfindungsgemäßer Weise ist weiter erkannt worden, daß die Vorgabe von Bearbeitungsschritten von Vektoren bzw. Kurven ausgeht, denen ein maschinenspezifisches Ablaufdiagramm zugrundegelegt wird. Unter Einbeziehung der maschinenspezifischen Daten werden dann die in Vektoren oder Kurven dargestellten Bearbeitungsschritte bzw. Bewegungen der Maschine in Form eines Polygonzuges umgerechnet. Da es sich bei einem Polygonzug in bekannter Weise um ein System von Strecken in einem euklidischen Raum handelt, sind mit zunehmender Abweichung der Bewegungen von einem ideal-linearen Verhalten zunehmend mehr Strecken in dem euklidischen Raum erforderlich.

Da sich Maschinenabläufe der in Rede stehenden Art nicht ausschließlich aus Vorschüben oder Drehungen, als nicht nur aus zurückgelegten Wegen bzw. Geschwindigkeiten oder Beschleunigungen zusammensetzen, sondern auch aus stationären Ereignissen, bspw. der Aktivierung eines Ventils oder dgl., ist es in erfindungsgemäßer Weise vorgesehen, daß die Steuerung je nach Bearbeitungsart weggetaktet oder zeitgetaktet arbeiten kann. Entsprechend wird der Bearbeitungsverlauf am Bildschirm in graphischer Form als gemische Polygonzugangabe dargestellt. Der Polygonzug kann je nach Bearbeitungsart abwechselnd weggetaktet und zeitgetaktet bzw. weggesteuert und zeitgesteuert sein. Folglich setzt sich der Polygonzug in erfindungsgemäßer Weise zusammen aus weggetakteten und zeitgetakteten Polygonzugelementen bzw. Strecken, die je nach der erforderlichen Bearbeitungsreihenfolge beliebig miteinader kombinierbar sind. Zum Erhalt eines besseren Überblicks des gesamten Maschinenablaufs kann der gesamte Prozeß mit sämtlichen Bewegungen und Bearbeitungen weggetaktet und/oder zeitgetaktet in einem einzigen Graphen dargestellt sein. Die den Maschinenablauf darstellende Weg- bzw. Zeitachse ist lediglich durch die Speicherkapazität des Rechners begrenzt.

Hinsichtlich einer besonders einfachen Handhabung des erfindungsgemäßen Verfahrens ist es nun von besonderem Vorteil, die Eingabe zur Definition der Vektoren und/oder Kurven graphisch durchzuführen. Dabei können die Kurven und Vektoren vorzugsweise über einen Cursor - unter Verwendung eines Menütabletts - oder unter Verwendung einer Maus eingegeben werden. Ebenso sind jedoch auch jegliche andere Eingabeverfahren zur Definition eines Vektors oder einer Kurve möglich.

Binäre Ereignisse der Steuerung, beispielsweise das Einschalten einer Dosiereinrichtung oder das Abschalten einer Induktionsspule, lassen sich in weiter vorteilhafter Weise über die Tastatur oder ebenfalls über ein vorzugsweise mittels eines Cursor bedienbaren Menüs eingeben. Die Ereignisse werden dabei an die Kurven bzw. an den aus den Kurven errechneten Polygonzug oder an die Zeit- bzw. Wegachse der die Kurven bzw. den Polygonzug enthaltenden Graphik gebunden. Mit anderen Worten werden diese Ereignisse bestimmten Koordinaten zugeordnet, wobei es sich bei diesen Koordinaten um Weg- oder Zeitkoordinaten handeln kann.

Die maschinen- und prozeßspezifischen Daten sind in vorteilhafter Weise in einer eigens dafür vorgesehenen Datenbank abgespeichert und sind zur Umrechnung der Vektoren und Kurven in die das Echtzeitverhalten der Maschinen bzw. des Prozesses berücksichtigenden Polygonzüge jederzeit abfragbar und den Vektoren und Kurven bzw. den daraus resultierenden Polygonzügen zuordenbar.

Hinsichtlich einer besonders flexiblen Ausgestaltung des in Rede stehenden Verfahrens ist von weiterem Vorteil, wenn die maschinen- und prozeßspezifischen Daten vorzugsweise über die Tastatur änderbar bzw. neu vorgebbar sind. Damit sind die maschinen- und prozeßspezifischen Daten nicht starr vorgegeben, sondern können vielmehr an äußere Gegebenheiten bzw. Leistungsänderungen durch Verschleiß oder dgl. angepaßt werden. Die Steuerung ist dadurch höchst flexibel und vom Operator aus beliebig manipulierbar.

Der Polygonzug ist je nach Bearbeitungsart abwechselnd weggetaktet und zeitgetaktet bzw. weggesteuert und zeitgesteuert. Mit anderen Worten setzt sich der Polygonzug insgesamt aus weggetakteten und zeitgetakteten Polygonzugelementen zusammen, die je nach der erforderlichen Bearbeitungsreihenfolge beliebig kombinierbar sind. Hinsichtlich eines besseren Überblicks des gesamten Prozeßablaufs wird der gesamte Prozeß mit sämtlichen Bewegungen und Bearbeitungen - weggetaktet und/oder zeitgetaktet - in einem einzigen Graphen dargestellt. Die den Prozeßablauf darstellende Weg- bzw. Zeit-Achse ist lediglich durch die Speicherkapazität des Rechners begrenzt. Unter Zugrundelegung einer "unendlichen" Speicherkapazität ist demnach die Weg- bzw. Zeit-Achse unendlich. Damit nun auch eine solche "unendliche" Zeit-Achse zur Überprüfung des Prozeßablaufs am Bildschirm gesichtet werden kann, läßt sich zur quasi endlosen Darstellung des Prozeßablaufs der Bildschirm horizontal scrollen. Der Operator kann demnach jede Position auf der Zeit-Achse anfahren und die Soll-Vorgabe des Prozesses überprüfen.

Da nun auch unter Zugrundelegung maschinen- bzw. prozeßspezifischer Daten die durch den Polygonzug vorgegebenen SollWerte - zumindest beim Einrichten der Steuerung - mehr oder weniger von den durch die Steuerung realisierten Ist-Werten der Maschine bzw. des Prozesses abweichen, ist es zur "Feineinstellung" der Steuerung von großem Vorteil, wenn die mit der Steuerung realisierten Ist-Werte der Maschine bzw. des Prozesses den vorgegebenen Soll-Werten am Bildschirm graphisch überlagert werden. Dazu könnten die tatsächlich erreichten Ist-Werte entweder den den Ausgangspunkt für die Steuerung bildenden Kurven bzw. Vektoren oder den aus den Kurven bzw. Vektoren errechneten Polygonzügen überlagert werden. Wesentlich für diese Überlagerung ist jedenfalls, daß die realisierten Ist-Werte mit den Soll-Werten verglichen werden können, so daß der Operator den Maschinenablauf bzw. den Prozeß korrekt steuern oder beeinflussen kann.

Die den Soll-Werten gegenüberzustellenden Ist-Werten lassen sich auf den Bildschirm wahlweise in Form von Kurven oder Vektoren in Kurvenform darstellen bzw. anzeigen. Besonders vorteilhaft ist es, wenn die Ist-Werte beispielsweise einblendbar sind, so daß der gesamte Polygonzug bereichsweise überprüft werden kann.

Mittels der beispielsweise im Rahmen eines sogenannten Null-Durchganges ermittelten Ist-Werte läßt sich nun eine IstWert-abhängige Korrektur der Soll-Werte und somit des den Prozeß definierenden Polgonzugs durchführen. Dort, wo die Abweichungen der Ist-Werte von den Soll-Werten beachtlich ist, wo beispielsweise die Trägheit eines Motors beim Anfahren nicht hinreichend berücksichtigt worden ist, können entweder die der Berechnung des Polygonzuges zugeführten Kenndaten der Maschine geändert werden oder kann direkt der Polygonzug durch Änderung der dem Polygonzug zugrundeliegenden Vektoren oder Kurven beeinträchtigt werden. Der so berechnete neue Polygonzug bzw. die dadurch vorgegebenen Soll-Werte können dann in einem nächsten Durchgang mit den aus diesen Soll-Werten resultierenden Ist-Werten erneut verglichen werden. Wesentlich ist jedenfalls, daß eine stetige Rückkopplung aus dem Prozeß auf die Steuerung möglich ist, wodurch die Steuerung im eigentlichen Sinne zur Regelung wird.

Die mit der Steuerung realisierten Ist-Werte können in vorteilhafter Weise gespeichert und zur Berechnung eines an die maschinen- bzw. prozeßspezifischen Daten angepaßten Polygonzuges insgesamt gegen die bisherigen Soll-Werte ausgetauscht werden. Im Rahmen einer solchen Steuerung könnte eine Optimierung dahingehend erfolgen, daß bei nicht tolerierbaren Abweichungen stets die realisierten Ist-Werte die ursprünglich vorgegebenen Soll-Werte ersetzen, so daß das System als quasi "lernfähiges" System arbeitet. Alternierend würde man sich dann wohl einem Optimum nähern.

Die optimierten Soll-Werte könnten des weiteren durch ein Automatisierungsgerät übernommen und in einer Datenbank zum beliebigen Abrufen gespeichert werden. Bestimmten Maschinen und/oder Prozessen zugeordnete optimierte Soll-Werte könnten dabei katalogisiert abgelegt werden, so daß den Maschinen bzw. Prozessen stets optimale Soll-Werte bzw. optimale Polygonzüge zuordenbar sind. Das Ablegen bzw. Speichern der optimierten Soll-Werte könnte derart erfolgen, daß diese nach unterschiedlichen Auswahlkriterien wieder auswählbar sind. Auswahlkriterium könnte die Benutzernummer eines Operators, die Zuordnung zu einer Maschine oder einem Prozeß oder dgl. sein.

Hinsichtlich der Verfahrensentwicklung unter Zugrundelegung einer Steuerung der in Rede stehenden Art ist es von besonderem Vorteil, wenn Prozeßabläufe darstellende Vektoren und Kurven bzw. daraus unter Zugrundelegung der maschinen- bzw. prozeßspezifischen Daten errechnete Polygonzüge herangezogen werden. Durch Simulation könnte ein Verfahren unter Zugrundelegung der maschinen- und prozeßspezifischen Daten "konstruiert" werden, wobei bereits bei der Simulation das Echtzeitverhalten realer Maschinen bzw. Prozesse Berücksichtigung finden würde.

Nun könnte das erfindungsgemäße Verfahren auch zur hundertprozentigen Werkstoffprüfung, Produktprüfung, Funktionsprüfung oder dgl. eingesetzt werden. Dies könnte in vorteilhafter Weise so erfolgen, daß dem eigentlichen Prozeßablauf zunächst eine zerstörungsfreie Werkstoffprüfung, Produktprüfung, Funktionsprüfung, etc. nachgeschaltet wird und daß die bei vorgegebenen Soll-Werten der Steuerung ermittelten Fehler dem jeweiligen Ist-Wert-Verlauf und somit auch den entsprechenden Soll-Werten der Steuerung zugeordnet werden. Ebenso könnte der ermittelte Fehler auch einer bestimmten Abweichung der Ist-Werte von den Soll-Werten zugeordnet werden. Die sich daraus ergebende Korrelation ermöglicht es, bei einer bestimmten Abweichung der Ist-Werte von den Soll-Werten auf eine Fehlerwahrscheinlichkeit beim Prozeßablauf zu schließen. Durch Vermeidung der die ermittelten Fehler hervorrufenden Abweichungen könnte auch die Fehlerwahrscheinlichkeit des Maschinenablaufs bzw. des Prozeßablaufs verringert bzw. minimiert werden. In einem nächsten Schritt müßten die Soll-Werte aufgrund der ermittelten Korrelation zwischen Fehler und IstWert bzw. Fehler und der Abweichung zwischen Ist-Wert und Soll-Wert korrigiert werden, so daß aus den korrigierten Kurven bzw. Vektoren wieder neue Polygonzüge zur Steuerung des Prozeßablaufs berechnet werden können.

Hinsichtlich einer allumfassenden Steuerung von Prozeßabläufen ist es von besonderem Vorteil, wenn beliebigen Punkten der die Soll-Werte vorgebenden Kurve bzw. des die Soll-Werte vorgebenden Polygonzugs eine Ereignistabelle zuordenbar ist.

Die Ereignistabelle könnte Daten zur Aktivierung beispielsweise einer das zu bearbeitende Werkstück aufheizenden Heizanlage oder bezüglich einer das zu bearbeitende Werkstück besprühenden Sprühanlage oder dgl. aufweisen. Diese Daten könnten den eigentlichen Bearbeitungsprozeß nicht oder nur am Rande betreffen. Selbstverständlich könnten sich diese Daten auch direkt auf den Bearbeitungsprozeß beziehen. Die bestimmten Punkten im Polygonzug zugeordneten Ereignistabellen könnten wahlweise auf dem Bildschirm durch Einblenden einer Maske darstellbar sein. Die Ereignistabelle könnte schließlich auch von der Tastatur aus veränderbar bzw. neu eingebbar sein. Des weiteren könnte eine Rückkopplung der Daten der Ereignistabelle auf den berechneten Polygonzug und somit auf den zu steuernden Prozeß erfolgen, so daß mittels der Ereignistabelle und der darauf bezogenen Rückkopplung beispielsweise periphere Prozesse bzw. Maschinenabläufe mit dem eigentlichen Prozeßablauf verknüpft werden können.

Schließlich könnte zur Dokumentation der kurvengesteuerten Programmvorgabe ein graphikfähiger Drucker vorgesehen sein. Dabei könnte es sich in vorteilhafter Weise um einen graphikfähigen Farbdrucker handeln, zumal durch unterschiedliche Farbgebung die Vektoren, Kurven, Polygonzüge, Ist-Werte in jeglicher Darstellungsart, eingeblendete Masken und dgl. optimal voneinander unterscheidbar dargestellt werden können.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines graphisch dargestellten Prozeßablaufs unter Zugrundelegung des erfindungsgemäßen Steuerungsverfahrens anhand der Zeichnung zu verweisen. In Verbindung mit der Erläuterung dieses Prozeßablaufs unter Zugrundelegung der erfindungsgemäßen Steuerung anhand der Zeichnung werden auch im allgemeinen bevorzugte Ausgestaltungen und Weiterbildungen der Lehre erläutert. In der Zeichnung zeigt
- Fig. 1: in einem Diagramm, schematisch, die graphische Darstellung eines Prozeßablaufs bei gemischter Polygonzugangabe zur Vorgabe von Soll-Werten und
- Fig. 2: in einem Diagramm, schematisch, einen Hilfsgraphen, der Drehzahl, Geschwindigkeit, Fördervolumen oder dgl. wegabhängig darstellt.

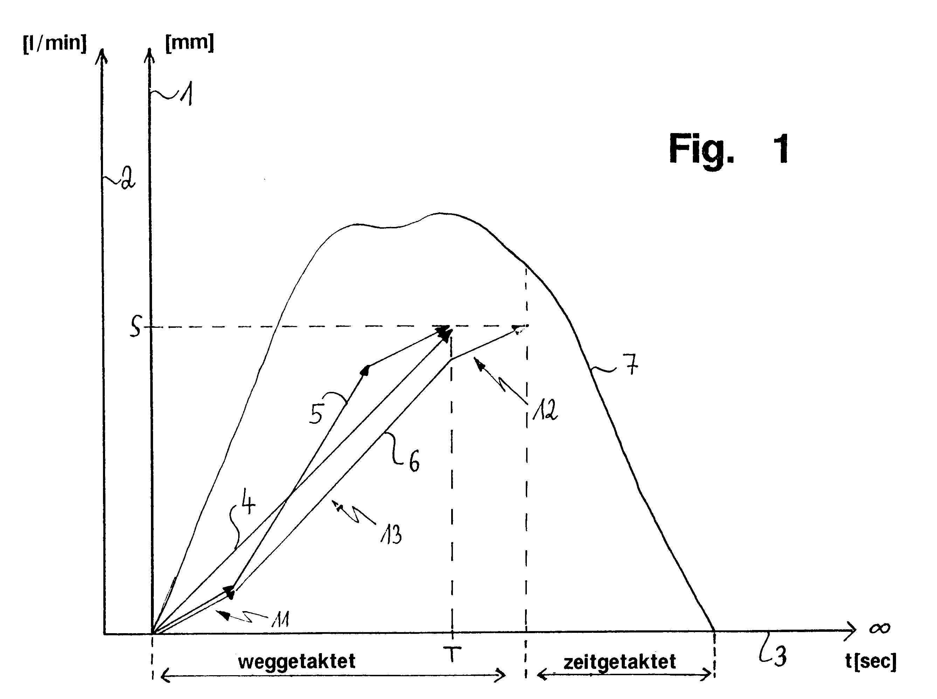

Bei dem in Fig. 1 gewählten Diagramm kann es sich beispielsweise um die graphisch dargestellte Steuerung einer Härteeinrichtung handeln. Auf den beiden Ordinaten 1, 2 könnte einerseits der Werkstückvorschub (Ordinate 1), andererseits die Fördermenge (Ordinate 2) eines beim Härten erforderlichen Fluidums zum Brausen des zu härtenden Werkstücks abgetragen sein. Die Abzisse 3 läßt sich durch Scrollen des Bildschirms unendlich darstellen, wobei dort die für die Bearbeitung zu benötigende Zeit in Sekunden dargestellt ist. Die Gerade 4 zeigt das ideale Verfahren des zu härtenden Werkstücks um die Strecke S bis zum Zeitpunkt T, wobei hier von Beginn der Förderbewegung an bis zum Ende der Förderbewegung eine konstante Geschwindigkeit vorausgesetzt wird. Eine solche Vorgabe - wie sie bei herkömmlichen Steuerverfahren üblich ist - ist jedoch nicht realistisch.

Unter Zugrundelegung der maschinen- bzw. prozeßspezifischen Daten ist nämlich zunächst eine ggf. maximale Beschleunigung zu Beginn der Bewegung 11, dann eine Bewegung mit konstanter Geschwindigkeit 13 und gegen Ende des Bearbeitungsvorganges bzw. Bewegungsvorganges eine negative Beschleunigung 12 bzw. ein Bremsen des Werkstücks erforderlich. Diese tatsächlichen Gegebenheiten sind durch die berechneten Polygonzüge 5 und 6 berücksichtigt, wobei das anfängliche Beschleunigen 11, die konstante Geschwindigkeit 13 nach der Beschleunigung 11 und das abschließende Abbremsen 12 als jeweils linearer Vorgang zugrundegelegt wurde. Selbstverständlich lassen sich diese drei jeweils durch Geraden dargestellte Vorgänge durch Zerlegung in weitere Polygonzugstrecken präzisieren bzw. weiter anpassen.

Die Polygonzüge 5 und 6 unterscheiden sich dadurch, daß Polygonzug 5 gegenüber dem die Soll-Werte vorgebenden Vektor 4 die gleiche Bearbeitungszeit T aufweist, jedoch dabei durch eine variable Drehzahl zum Fördern des Werkstückes geprägt ist. Polygonzug 6 weist dagegen gegenüber dem vorgegebenen Vektor 4 maximale Beschleunigung und konstante Drehzahl auf, wobei die insgesamt benötigte Zeit zum Zurücklegen der Strecke S über der durch den Vektor 4 vorgegebenen Zeit T liegt.

Bis zur Beendigung des Werkstückvorschubes, d.h. so lange bis der Weg S zurückgelegt ist, ist die Steuerung bzw. die durch den Polygonzug vorgegebene Steuerung weggetaktet. Anschliessend erfolgt lediglich nur noch ein Berieseln bzw. Brausen des Werkstückes, was wiederum durch Soll-Werte der Kurve 7 vorgegeben ist. Dieser Vorgang ist im Bereich des weggetakteten Polygonzugs diesem stets überlagert. Nach Zurücklegen des Weges S ist dies jedoch der einzige weitere Vorgang im Rahmen des gesamten Prozeßablaufs. Dies bedeutet, daß der Polygonzug nach Zurücklegen des Weges S aufgrund einer mangelnden Bewegung beim weiteren Verfahren am besten zeitgetaktet verläuft. Mit anderen Worten handelt es sich bei der Darstellung in Fig. 1 um eine gemischte Polygonzugangabe zur graphisch dargestellten Steuerung des in Rede stehenden Prozesses.

Selbstverständlich ließen sich jegliche weiteren Prozeßabläufe im Rahmen der mit endloser Abzisse gewählten Darstellung abbilden, wobei der Übersicht halber hier lediglich zwei Bearbeitungsgänge - Verfahren und Brausen - gewählt wurden.

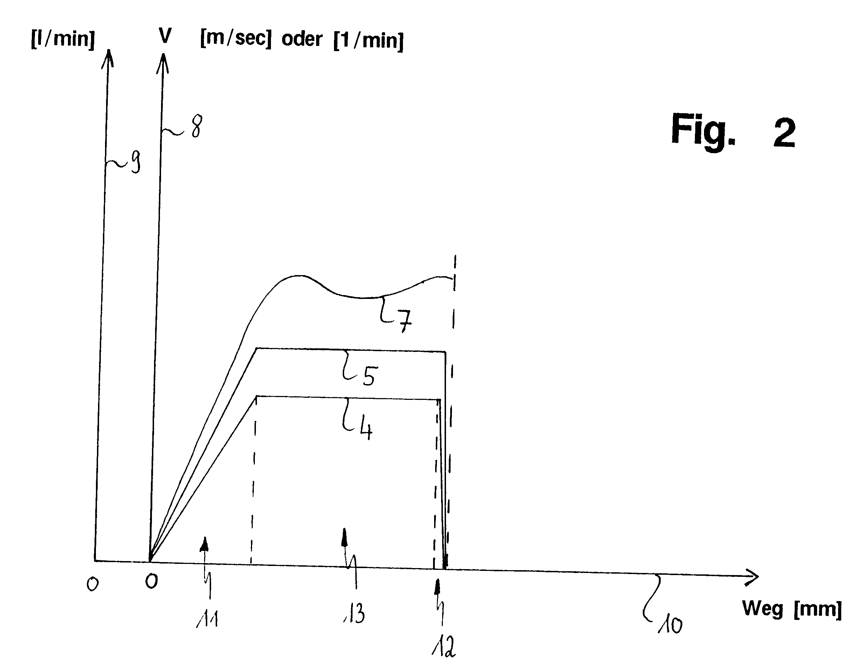

Fig. 2 stellt eine wahlweise auf dem Bildschirm einblendbare Graphik dar, wobei hier Ordinate 8 die Geschwindigkeit und Ordinate 9 in gehabter Weise das Fördervolumen zum Berieseln des Werkstückes darstellt. Bei der Abzisse 10 handelt es sich um den zurückgelegten Weg, wobei der Berieselungsvorgang lediglich bis zur Beendigung des Verfahrens des Werkstückes, also bis zum Vollenden der Wegstrecke S, dargestellt ist. Entsprechend stellen die Geraden bzw. Kurven 4, 5 und 7 - wie in Fig. 1 - den vektormäßig vorgegebenen Verlauf sowie den polygonmäßig vorgegebenen Verlauf unter Berücksichtigung der maschinen- bzw. prozeßspezifischen Kenndaten dar. Die Bereiche 11 und 12 zeigen eine lineare Beschleunigung bzw. eine lineare Verzögerung und der Bereich 13 zeigt eine konstante Geschwindigkeit beim Werkzeugvorschub oder eine konstante Drehzahl.

Zur einsetzbaren Hardware sei noch hervorgehoben, daß als Prozeßrechner ein Personal-Computer in Industrieausführung in Frage kommt, der beispielsweise den Prozessor 80386SX, 80386DX oder 80486, d.h. eine schnelle Zentraleinheit, beinhaltet. Bei den Prozessoren 80386SX und 80386DX ist zusätzlich ein Arithmetikprozessor erforderlich. Zur Darstellung der Kurvenzüge kommt in vorteilhafter Weise ein Farbmonitor 14" oder größer zum Einsatz. Dabei eignet sich besonders ein Mehrfrequenzmonitor.

Die zur Ansteuerung erforderliche Farbgraphikkarte ist nach dem VGA-Standard oder nach TIGA-Standard ausgewählt und weist einen eigenen Graphikprozessor auf.

Die in vorteilhafter Weise verwendete Festplatte nach ESDI ist mit mindestens 40 MByte bis zu mehreren hundert MByte ausgestattet. Die Festplatte sollte kurze Zugriffszeiten von maximal 20 msec aufweisen. Der Festplatten-Controller sollte eine Interleave von 1 : 1 aufweisen.

Zum Editieren der Kurven und Vektoren wird eine Microsoftkompatible Maus oder ein Microsoft-kompatibler Trakball verwendet.

Die Verbindung zur speicherprogrammierbaren Steuerung, z.B. Ciematik S5 (eingetragenes Warenzeichen von Siemens), erfolgt mit einer schnellen Kopplung. Dabei kann beispielsweise ein Ethernet Bus mit 10 MBit/s oder eine Kopplung der internen Busse des PCs und SPS über einen Dual-Port-Ram mit einer Datenübertragung von bis zu 200 KByte/sec gewählt werden. Der PC wird in diesem Fall in einen Zentralgeräterahmen der speicherprogrammierbaren Steuerung gesteckt bzw. geschoben.

Zur Dokumentation der kurvengesteuerten Programmvorgabe wird schließlich in vorteilhafter Weise ein graphikfähiger Farbdrucker eingesetzt.

## Patentansprüche

1. Verfahren zur computergestützten Steuerung eines Maschinenablaufs unter Verwendung eines mit der Maschine über eine Schnittstelle verbundenen Prozeßrechners, eines mit dem Prozeßrechner verbundenen Bildschirms zur graphischen Darstellung des Maschinenablaufs und einer vorzugsweise als Tastatur ausgeführten Eingabeeinrichtung zur Programmierung der Steuerung bzw. zur Soll-Wert-Vorgabe,
wobei der Steuerung zunächst ein maschinenspezifisches Ablaufdiagramm zugrundegelegt wird und die Programmierung des Steuerungsvorganges bzw. die Vorgabe einzelner Bearbeitungsschritte von Vektoren und/oder Kurven ausgeht,
**dadurch gekennzeichnet**, daß das Zeitverhalten der Maschine dadurch berücksichtigt wird, daß die Bearbeitungsschritte und somit die einzelnen Bewegungen und Vorgänge unter Einbeziehung der maschinenspezifischen Daten in Form eines an den Maschinenablaufs gebundenen Polygonzuges umgerechnet werden, daß die Steuerung je nach Bearbeitungsart weggetaktet oder zeitgetaktet und entsprechend am Bildschirm in graphischer Form als ggf. gemischte Polygonzugangabe abwechselnd weggetaktet und zeitgetaktet in einem einzigen Graphen dargestellt ist.

2. Verfahren nach Anspruch 1, dadurch gekennzeichnet, daß die Eingabe zur Definition der Vektoren und/oder Kurven graphisch erfolgt, wobei die Kurven und Vektoren vorzugsweise über einen Cursor oder eine Maus eingegeben werden.

3. Verfahren nach Anspruch 1 oder 2, dadurch gekennzeichnet, daß binäre Ereignisse für die Steuerung über die Tastatur oder ein vorzugsweise mittels eines Cursor bedienbares Menü eingegeben werden, wobei die Ereignisse an die Kurven bzw. den aus den Kurven errechneten Polygonzug oder an die Zeit- bzw. Wegachse gebunden werden.

4. Verfahren nach einem der Ansprüche 1 bis 3, dadurch gekennzeichnet, daß die maschinenspezifischen Daten in einer Datenbank abgespeichert und zur Umrechnung der Vektoren und Kurven in Polygonzüge jederzeit abfragbar sind oder vorzugsweise über die Tastatur änderbar bzw. neu vorgebbar sind.

5. Verfahren nach Anspruch 1, dadurch gekennzeichnet, daß die den Maschinenablauf darstellende Weg- bzw. Zeit-Achse lediglich durch die Speicherkapazität des Rechners begrenzt ist und daß zur quasi endlosen Darstellung des Maschinenablaufs der Bildschirm ggf. horizontal gescrollt wird.

6. Verfahren nach einem der Ansprüche 1 bis 5, dadurch gekennzeichnet, daß die mit der Steuerung realisierten Ist-Werte der Maschine den vorgegebenen Soll-Werten am Bildschirm graphisch überlagert werden, daß die Ist-Werte wahlweise in Form von Kurven oder Vektoren in Kurvenform auf dem Bildschirm anzeigbar sind und daß mittels der Ist-Werte eine Ist-Wert abhängige Korrektur der Soll-Werte und somit des den Maschinenablauf definierenden Polygonzugs erfolgen kann.

7. Verfahren nach Anspruch 6, dadurch gekennzeichnet, daß die realisierten Ist-Werte abgespeichert und zur Berechnung eines an die maschinenspezifischen Daten angepaßten Polygonzuges gegen die bisherigen Soll-Werte ausgetauscht werden, daß ggf. optimierte Soll-Werte durch ein Automatisierungsgerät übernommen und in einer Datenbank gespeichert werden und daß ggf. vorgegebene oder optimierte Soll-Werte bzw. Soll-Kurvenwerte in einer Datenbank gespeichert werden und nach unterschiedlichen Auswahlkriterien wählbar sind.

8. Verfahren nach einem der Ansprüche 1 bis 7, dadurch gekennzeichnet, daß Maschinenabläufe darstellende Vektoren und Kurven bzw. die daraus und unter Zugrundelegung der maschinenspezifischen Daten errechneten Polygonzüge zur Verfahrensentwicklung dienen.

9. Verfahren nach einem der Ansprüche 1 bis 8, dadurch gekennzeichnet, daß dem eigentlichen Maschinenablauf eine zerstörungsfreie Werkstoffprüfung, Produktprüfung, Funktionsprüfung etc. nachgeschaltet ist, daß ermittelte Fehler einem Ist-Wert-Verlauf oder einer bestimmten Abweichung der Ist-Werte von den Soll-Werten zugeordnet werden und daß die Soll-Werte aufgrund der ermittelten Korrelation zwischen Fehler und Ist-Wert bzw. Fehler und Ist-Wert - Soll-Wert - Abweichung korrigiert und somit die daraus berechneten Polygonzüge beeinflußt werden.

10. Verfahren nach einem der Ansprüche 1 bis 9, dadurch gekennzeichnet, daß beliebigen Punkten der Kurve bzw. des Polygonzugs eine Ereignistabelle zuordenbar ist, daß die Ereignistabelle Daten aufweist, die den eigentlichen Maschinenablauf nicht oder nur am Rande betreffen, daß ggf. die Ereignistabelle auf dem Bildschirm durch Einblenden einer Maske darstellbar ist und daß ggf. eine Rückkopplung der Daten der Ereignistabelle auf den berechneten Polygonzug und somit auf den zu steuernden Maschinenablauf erfolgt.

## Claims

1. Method for the computer-assisted control of a machine sequence using a process computer connected to the machine via an interface, a screen connected to the process computer for the graphic display of the machine sequence, and an input device, preferably in the form of a keyboard, for programming the control or predetermining set values, firstly a machine-specific flow chart being taken as a basis for the control, and the programming of the control operation or the predetermination of individual machining steps proceeding from vectors and/or curves, characterised in that the time behaviour of the machine is considered in that the machining steps and thus the individual movements and operations are converted by including the machine-specific data into the form of a polygonal course linked to the machine sequence; and in that, depending on the type of machining operation, the control is path-dependent or time-dependent and is accordingly displayed in graphics on the screen as a presentation of a mixed polygonal course if necessary alternately in a path-dependent and time-dependent manner and a single graph.

2. Method according to Claim 1, characterised in that the input for defining the vectors and/or curves occurs graphically, the curves and vectors preferably being input via a cursor or a mouse.

3. Method according to Claim 1 or 2, characterised in that binary events for the control are input via the keyboard or a menu preferably operable by means of a cursor, the events being linked to the curves or to the polygonal course calculated from the curves, or to the time or path axis.

4. Method according to any one of Claims 1 to 3, characterised in that the machine-specific data are stored in a data base and can be queried at any time for converting the vectors and curves into polygonal courses or they can preferably be changed or newly predetermined via the keyboard.

5. Method according to Claim 1, characterised in that the path or time axis representing the machine sequence is limited only by the storage capacity of the computer; and in that the screen is scrolled horizontally if necessary for a quasi endless display of the machine sequence.

6. Method according to any one of Claims 1 to 5, characterised in that the actual values of the machine realised with the control are graphically superposed on the screen upon the predetermined set values; in that the actual values can be selectively displayed on the screen in the form of curves or vectors in curve form; and in that the actual values allow correction of the set values as a function of the actual values and thus of the polygonal course defining the machine sequence.

7. Method according to Claim 6, characterised in that the realised actual values are stored and exchanged for the previous set values for calculating a polygonal course adapted to the machine-specific data; in that if necessary optimised set values are taken over by an automating device and saved in a data base; and in that if necessary predetermined or optimised set values or set curve vales are stored in a data base and can be selected in accordance with different selection criteria.

8. Method according to any one of Claims 1 to 7, characterised in that vectors and curves representing machine sequences or the polygonal courses calculated therefrom on the basis of machine-specific data are used to develop the process.

9. Method according to any one of Claims 1 to 8, characterised in that the actual machine sequence is followed by a nondestructive testing of material, product, function, etc.; in that detected errors are allocated to an actual value curve or a given deviation of the actual values from the set values; and in that the set values are corrected on the basis of the correlation determined between error and actual value or error and actual value-set value deviation and thus the polygonal courses calculated therefrom are influenced.

10. Method according to any one of Claims 1 to 9, characterised in that a table of events can be allocated to optional points of the curve or polygonal course; in that the table of events contains data which are unrelated or only marginally related to the actual machine sequence; in that if necessary the table of events can be displayed on the screen by fading in a mask; and in that the data in the table of events are fed back if necessary to the calculated polygonal course and thus to the machine sequence to be controlled.

## Revendications

1. Procédé pour la commande assistée par ordinateur d'un processus avec utilisation d'une calculatrice de processus connectée à la machine par l'intermédiaire d'un interface, d'un écran relié à la calculatrice de processus pour la représentation graphique du processus et d'un dispositif d'entrée ayant de préférence la forme d'un clavier pour la programmation de la commande ou pour l'introduction de la valeur de consigne,
la commande étant d'abord effectuée sur la base d'un diagramme de processus spécifique à la machine et la programmation de l'opération de commande ou l'entrée de diverses étapes de traitement étant originaire de vecteurs et/ou de courbes,
caractérisé en ce que le comportement en fonction du temps de la machine est pris en considération par le fait que les étapes de traitement et dès lors les différents mouvements et événements sont convertis compte tenu des données spécifiques à la machine sous forme d'un itinéraire polygonal lié au processus de la machine, en ce que suivant la nature du traitement la commande est cadencée en distance ou en temps et est en conséquence représentée à l'écran sous forme graphique en tant que le cas échéant représentation d'itinéraire polygonal mixte alternativement en cadence de distance et en cadence de temps par un seul graphe.

2. Procédé suivant la revendication, 1, caractérisé en ce que l'entrée de la définition des vecteurs et/ou des courbes a lieu par voie graphique, les courbes et vecteurs étant entrés de préférence par l'intermédiaire d'un curseur ou d'une souris.

3. Procédé suivant la revendication 1 ou la revendication 2, caractérisé en ce que des événements binaires pour la commande sont introduites par l'intermédiaire du clavier ou d'un menu commandé de préférence au moyen d'un curseur, les événements étant liés aux courbes ou à l'itinéraire polygonal calculé sur la base des courbes ou bien à l'axe du temps ou à l'axe des distances.

4. Procédé suivant l'une quelconque des revendications de 1 à 3, caractérisé en ce que les données spécifiques à la machine sont mises en mémoire dans une banque de données et sont, pour la conversion des vecteurs et des courbes en itinéraires polygonaux, accessibles à tout moment et peuvent de préférence par l'intermédiaire d'un clavier être modifiées ou être introduites une nouvelle fois.

5. Procédé suivant la revendication 1, caractérisé en ce que l'axe des distances ou du temps représentant le processus de la machine est limité uniquement par la capacité de mémoire de la calculatrice et en ce que pour la représentation quasi sans fin du processus de la machine, l'écran est le cas échéant mis en défilement horizontal.

6. Procédé suivant l'une quelconque des revendications de 1 à 5, caractérisé en ce que les valeurs instantanées réalisées par la commande de la machine sont superposées graphiquement à l'écran aux valeurs de consigne introductions, en ce que les valeurs instantanées peuvent être affichées à l'écran à volonté sous forme de courbes ou de vecteurs en forme de courbes et en ce qu'au moyen des valeurs instantanées peut avoir lieu une correction des valeurs de consigne en fonction des valeurs instantanées et dès lors une correction de l'itinéraire polygonal qui définit le processus de la machine.

7. Procédé suivant la revendication 6, caractérisé en ce que les valeurs instantanées réalisées sont mises en mémoire et remplacent les valeurs de consigne antérieures pour le calcul d'un itinéraire polygonal adapté aux données spécifiques à la machine, en ce que les valeurs de consigne le cas échéant optimalisées sont reprises par un appareil d'automatisation et sont mises en mémoire dans une banque de données et en ce que des valeurs de consigne ou des courbes de valeurs de consigne le cas échéant introduites ou optimalisées sont mises en mémoire dans une banque de données et peuvent être sélectionnées selon des critères de sélection variables.

8. Procédé suivant l'une quelconque des revendications de 1 à 7, caractérisé en ce que les vecteurs ou les courbes représentant les processus de machine ou les itinéraires polygonaux calculés sur la base de ces vecteurs ou courbes en fonction des données spécifiques à la machine sont utilisés pour le développement de procédés.

9. Procédé suivant l'une quelconque des revendications de 1 à 8, caractérisé en ce que le processus proprement dit de la machine est suivi d'un essai de matériaux non destrtuctif, d'un contrôle de produit, d'un contrôle de fonctionnement etc., en ce que les erreurs détectées sont associées à une courbe de valeurs instantanées ou à un écart déterminé entre les valeurs instantanées et les valeurs de consigne et en ce que les valeurs de consigne sont corrigées sur la base de la corrélation déterminée entre l'erreur et la valeur instantanée ou entre l'erreur et l'écart entre la valeur instantanée et la valeur de consigne et que dès lors les itinéraires polygonaux ainsi calculés sont influencés.

10. Procédé suivant l'une quelconque des revendications de 1 à 9, caractérisé en ce qu'à des points choisis à volonté de la courbe ou de l'itinéraire polygonal peut être associé un tableau d'événements, en ce que le tableau d'événements présente des données qui ne concernent pas le processus proprement dit de la machine ou qui ne le concernent qu'en marge, en ce que le cas échéant le tableau d'événements peut être représenté à l'écran par l'insertion d'un masque et en ce que le cas échéant a lieu un couplage réactif entre les données du tableau d'événements et l'itinéraire polygonal calculé agissant dès lors sur le processus de machine à commander.
